# EUROPEAN PATENT SPECIFICATION

(11) **EP 3 064 391 B1**
(45) Date of publication and mention of the grant of the patent: **19.07.2017**
(21) Application number: 15157094.2
(22) Date of filing: 02.03.2015
(51) Int. Cl.: B60K 35/00, B60R 11/00, B60R 11/02, G02B 27/01

(54) **Head-up display system with rotation drive means arranged parallel to a combiner to move the combiner**
Blickfeld-Anzeigesystem mit Drehungsantriebsmittel, welches parallel zu einem Kombinator angeordnet ist, um den Kombinator zu bewegen
Système d'affichage tête haute comportant des moyens d'entraînement en rotation disposés parallèlement à un multiplexeur pour déplacer le multiplexeur

(43) Date of publication of application: 07.09.2016
(73) Proprietor: Jabil Circuit, Inc., St. Petersburg, Florida 33716 (US)
(72) Inventor: Haupt, Martin, 1230 Wien (AT); Zeleny, Johannes, 2331 Vösendorf (AT); Fuhrmann, Karl, 7141 Podersdorf (AT)
(74) Representative: Schwarz & Partner Patentanwälte OG

(56) References cited:
- EP-A1- 1 036 692
- EP-A2- 1 068 982
- WO-A2-2008/063632
- DE-A1-102012 008 575

## Description

The present invention concerns a head-up display system usable for traffic applications such as in automobiles according to the preamble of claim 1.

A head-up display or HUD is a transparent display panel that presents information to a user without requiring users to look away from a preferred viewing direction. The origin of the name stems from a pilot being able to view information with the head positioned "up" and looking forward, instead of angled down looking at lower instruments. Although they were initially developed for military aviation, HUD systems are nowadays used in commercial aircraft, automobiles, and other applications.

For example a driver can view traffic and the road in front of the vehicle through the transparent panel of a HUD system that is attached to a dashboard close to a windshield of the vehicle. A typical HUD system comprises a combiner, a projector and a video data source such as a computer. The combiner is typically an angled piece of glass or plastic located directly in front of the viewer that redirects the projected image from the HUD projector in such a way as to see the field of view and the projected image at the same time. Combiners may have special coatings that reflect the monochromatic light projected onto it from the projector unit while allowing all other wavelengths of light to pass through. In some optical layouts combiners may also have a curved surface to refocus the image from the projector. A combiner is comparable to a semi-transparent mirror. The HUD projector is usually mounted above or below the combiner. The computer provides the interface between the HUD projector and the systems or data to be displayed and generates the imagery and symbology to be displayed by the HUD projector towards the combiner which then further projects the images to the user.

Drive means for a HUD system which can move the combiner between a storage position and an operating position are known in the art. For example such a combiner is disclosed in document JP 2014-58299 A. In this design the combiner is stored in a housing when in a storage position. The housing is arranged vertically in the car dashboard and the drive means move the combiner between the operating position and the storage position in a substantial linear movement along a Z-direction. The drive means comprise a spindle drive with a spindle arranged in the Z-direction. A motor drives the spindle that moves the combiner.

Another apparatus for moving the combiner between a storage position and an operating position is known from the Document EP 1 036 692 A1. In this design the combiner is stored in a housing when the combiner is situated in the storage position. The housing is arranged vertically in the car dashboard behind the steering wheel. A lever actuated by a spring or an electric motor moves the combiner between the operating position and the storage position in a linear movement along the vertical direction. Furthermore an apparatus that shows the features of the preamble of claim 1 is disclosed in EP 1 036 692 A1, whereby the apparatus comprises means to adjust the angular position of the combiner around a horizontal axes when it is situated in the operating position.

Document EP 1 068 982 A2 discloses another apparatus for moving a display between a storage position and an operating position by drive means. In this design the drive apparatus of the display is embedded in a car dashboard. The drive means comprise an electric motor that drives two gearwheels which each of them has a driving pin eccentrically displaced from the rotational axes of a respective gearwheel. Each drive pin is interacting with a guiding member in a slider, which slider is coupled to the display and guides the linear movement along the vertical direction of the display between its operating position and its storage position.

Document WO 2008/063632 A2 discloses another apparatus for moving a combiner between a storage position and an operating position. Therefore the combiner is mounted pivotably on guide ways and a threaded rod. Furthermore, the apparatus comprises a closable housing with a cover, which housing can be mounted on or in the dashboard. By moving the combiner from the storage position towards the operating position, the cover releases an opening slot through which the combiner slides. Due to its mounting the combiner slides in a tilting motion from a horizontal storage position in a vertical operating position.

Document DE 10 2012 008 575 A1 discloses another apparatus for moving a combiner between a storage position and an operating position. In this design the combiner is also stored in a housing when the combiner is situated in the storage position. The drive apparatus comprises two gear wheels which each of them is coupled to a respective control lever, which respective control lever is coupled to a respective sliding member. The sliding members are connected to the screen and are arranged horizontally on the combiner. By turning the gear wheels with an electric motor, the combiner is moved in a linear movement along the vertical direction between its operating position and its storage position.

The known drive means for moving a HUD system in a vertical direction comprise the disadvantage that the combiner is only moveable between a storage position and an operating position by the drive means. If at all the angular position of the HUD system is adjustable there is provided an extra drive, which makes the system broad. The known drive means for moving a HUD system in a tilting movement from the storage position to the operating position comprise the disadvantage that the whole system is very space consuming. Thus, the known HUD systems are either not adjustable in a sufficient manner or are difficult to design into a car dashboard due to their size.

The aim of the invention is to provide a HUD system that overcomes the disadvantages of the HUD systems known in the art. This problem is solved by a head-up display system according to the preamble of claim 1 with the features of the characterizing part of claim 1.

According to the invention drive means of a head-up display system comprise a rotation drive means with a motor that drives a gearwheel with a driver pin that interacts with a slider curved guiding member in a first slider of a linear drive means to guide the substantial linear movement of the combiner between its operating position and its storage position, wherein the gearwheel is arranged substantially parallel to the combiner in its operating position (O) and its storage position. This provides the advantage of a compact mechanical realization with a small housing for the drive means of the combiner what makes it easy to design the HUD system into a car dashboard.

Further details and advantages of the drive means for the combiner in a head-up display system according to the invention will become more apparent in the following description and the accompanying drawings.
Figure 1 is a perspective view of relevant parts of a head-up display (HUD) system with the combiner in its operating position and the cover in its open position.
Figure 2 is a sectional view of the relevant parts of the HUD system of Figure 1 with the combiner in its operating position.
Figure 3 is a sectional perspective view of relevant parts of the HUD system of Figure 1 with the combiner in its operating position.
Figure 4 is a sectional view of the HUD system of Figure 1 with the combiner in its storage position.
Figure 5 is a sectional perspective view of relevant parts of the HUD system of Figure 1 with the combiner in its storage position.
Figure 6 is a top view of the relevant parts of the drive means of the HUD system of Figure 1 with the combiner in its storage position.
Figure 7 is a top view of the relevant parts of the drive means of the HUD system of Figure 1 with the combiner between its storage position and its operating position.
Figure 8 is a top view of the relevant parts of the drive means of the HUD system of Figure 1 with the combiner in its operating position and the driver pin at the begin of the sector to adjust the inclination of the combiner.
Figure 9 is a top view of the relevant parts of the drive means of the HUD system of Figure 1 with the combiner in its operating position and the driver pin in the middle of the sector to adjust the inclination of the combiner.
Figure 10 is a top view of the HUD system of Figure 9 with the nose gearwheel not meshed with the gearwheel.
Figure 11 is a top view of the HUD system of Figure 9 with the nose gearwheel which starts to mesh with the gearwheel.
Figure 12 is a top view of the HUD system of Figure 9 with the nose gearwheel meshed with the gearwheel.
Figure 13 is sectional perspective view of relevant parts of the HUD system of Figure 10.
Figure 14 is a sectional view of part of the adjustment drive to adjust the inclination of the combiner.
Figure 15 is a sectional view of part of the adjustment drive to adjust the inclination of the combiner with the combiner in an inclined operating position.
Figure 16 is a perspective view of relevant parts of the HUD system of Figure 1 with the cover in its open position.
Figure 17 is a perspective view of relevant parts of the HUD system of Figure 1 with the cover in its closed position.
Figure 18 is a perspective view of relevant parts of the HUD system of Figure 1 with the cover in its closed position and with a cover spring.
Figure 19 is a sectional view of the relevant parts of the HUD system of Figure 1 that shows the two separated parts of the housing.

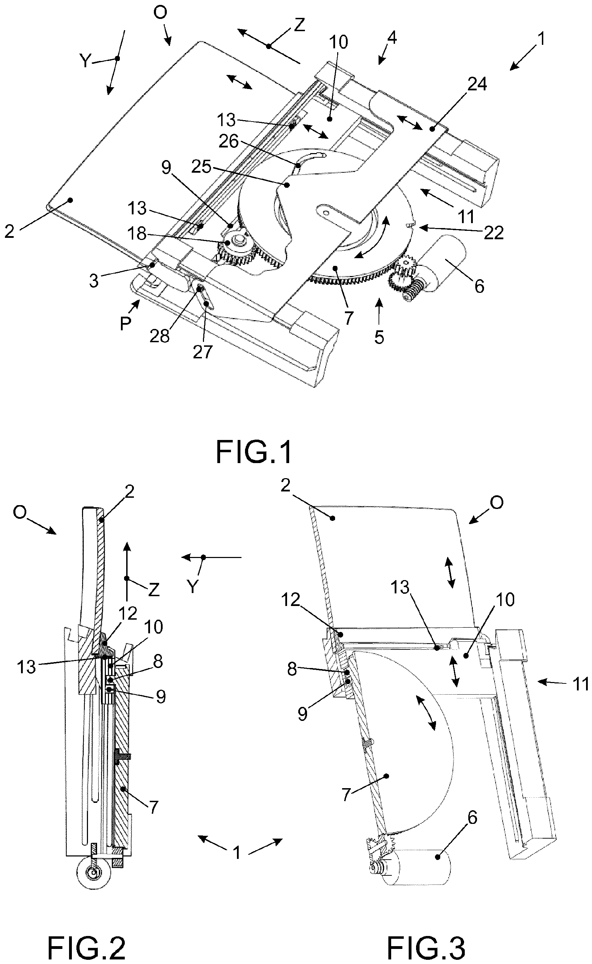

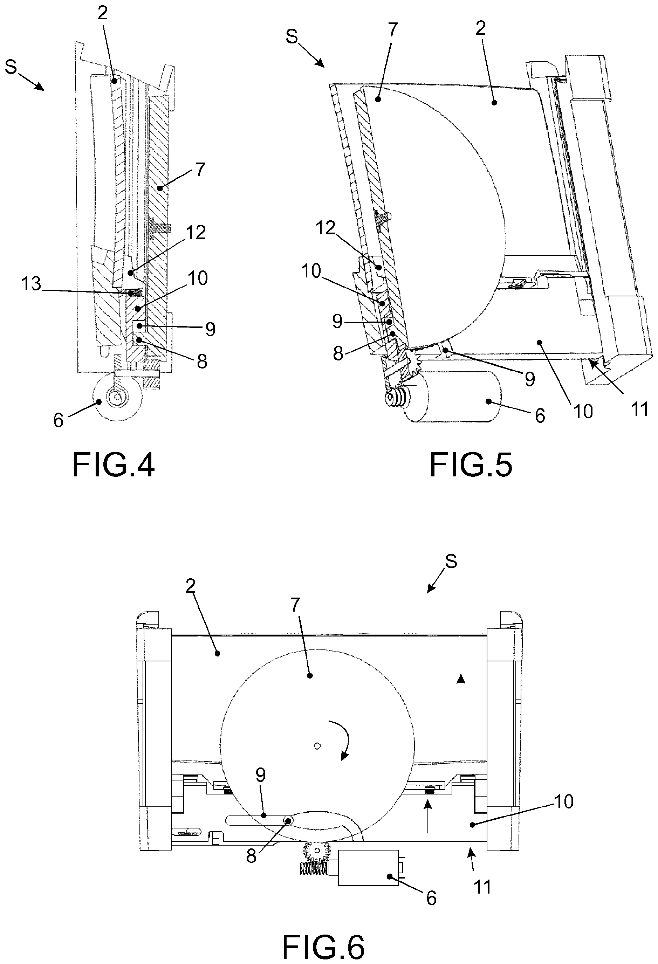

Figure 1 is a perspective view of relevant parts of a head-up display (HUD) system 1 with a combiner 2 in its operating position O and a cover 3 in its open position P. The HUD system 1 is realized to be integrated into the dashboard of a car with a Z-direction Z substantially vertical. Combiner 2 is a transparent display panel to present information to a user without requiring the user to look away from a preferred viewing direction which is substantially in Y-direction Y orthogonal to Z-direction Z. The HUD system 1 comprises drive means 4 to move the combiner 2 between its operating position O and its storage position S in a substantial linear movement in Z-direction Z. Figure 2 is a sectional view and Figure 3 is a sectional perspective view of the relevant parts of the HUD system 1 of Figure 1 with the combiner in its operating position O. Figure 4 is a sectional view and Figure 5 is a sectional perspective view of the relevant parts of the HUD system 1 with the combiner 2 in its storage position S.

Drive means 4 comprise rotation drive means 5 with a motor 6 that drives a gearwheel 7. Gearwheel 7 comprises a driver pin 8, shown in Figures 2 to 5, that interacts with a slider curved guiding member 9, shown in Figures 6 to 9, in a first slider 10 of linear drive means 11 to guide the substantial linear movement of the combiner 2 between its operating position O and its storage position S. Gearwheel 7 is arranged substantially parallel to combiner 2 in its operating position O and its storage position S. This arrangement has the advantage that drive means 4 of HUD system 1 only need little space and enable to design-in the HUD system 1 into a small volume of a cars' dashboard.

The linear drive means 11 comprise a second slider 12 fixed to combiner 2. Two springs 13 are arranged between the first slider 10 and the second slider 12. This split slider construction has the advantage that it enables to move the first slider 10 parallel to gearwheel 7 to guarantee a good interaction of driver pin 8 with slider curved guiding member 9 while at the same time enables the user to incline combiner 2 fixed to the second slider 12 for optimal viewing direction. Springs 13 ensure strong force from the first slider 10 to the second slider 12 to avoid vibrations of combiner 2.

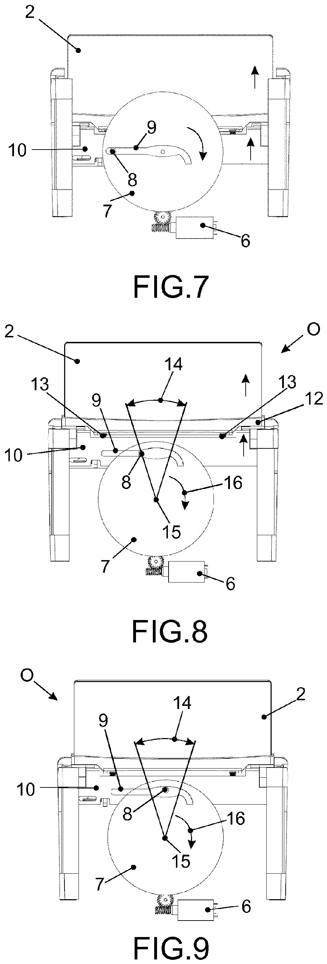

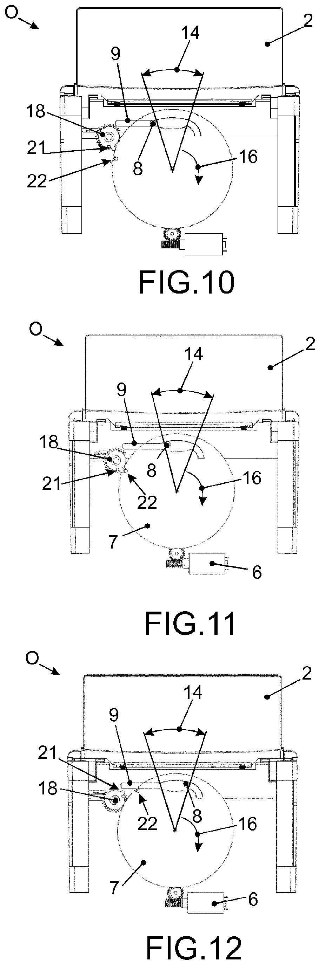

Figures 6 to 9 are top views of the relevant parts of drive means 4 of the HUD system 1 of Figure 1 in which Figures drive means 4 move combiner 2 from its storage position S to its operating position O. Figure 6 shows the combiner 2 in its storage position S and Figure 7 shows combiner 2 between its storage position S and its operating position O. In Figure 8 driver pin 8 reaches a sector 14 of the slider curved guiding member 9 in which sector 14 the guiding curve is a segment of a circle with the same midpoint 15 as gearwheel 7. This enables that a further rotation 16 of gearwheel 7, with the driver pin 8 within that angle sector 14, causes no movement of combiner 2 in Z-direction Z. Therefore motor 6 with gearwheel 7 is advantageously used as part of an adjustment drive 17 to adjust the inclination of combiner 2 as shown in Figures 10 to 15.

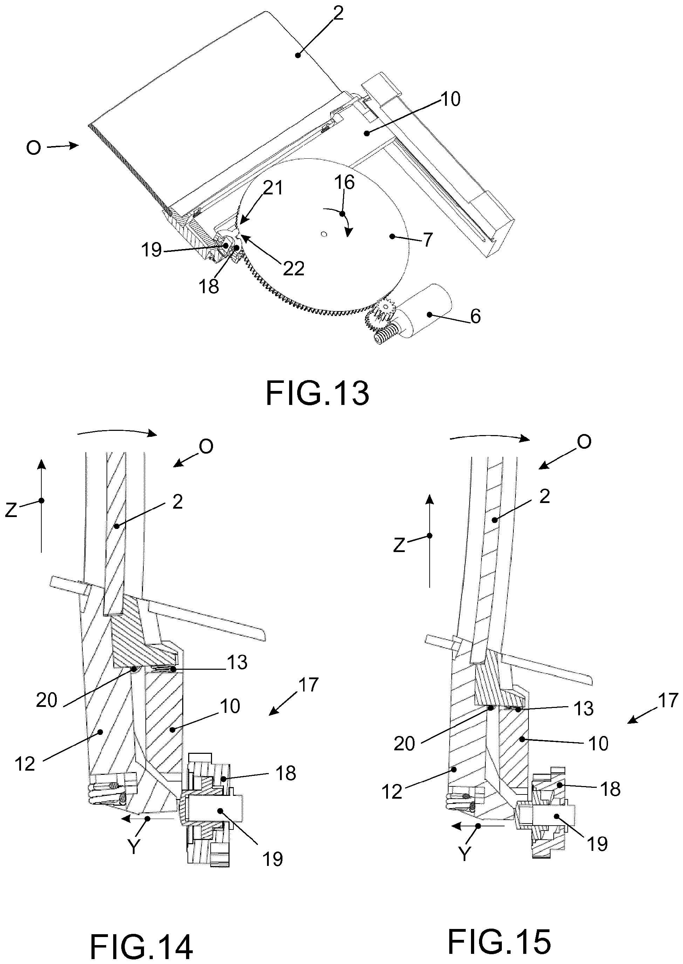

Adjustment drive 17 furthermore comprises a nose gearwheel 18 meshed with gearwheel 7 substantially only when driver pin 8 is within angle sector 14, where the rotation 16 of gearwheel 7 causes no movement of the combiner 2 in Z-direction Z. Nose gearwheel 18 drives an adjustment screw 19 shown in Figures 14 and 15 that pushes the second slider 12 in Y-direction Y to adjust the combiner 2 inclination around a combiner axis 20. Nose gearwheel 18 comprises a nose 21 that accesses opening 22 of gearwheel 7 and starts mashing of nose gearwheel 18 with gearwheel 7 with further rotation 16 when driver pin 8 gets within angle sector 14 as shown in Figure 11.

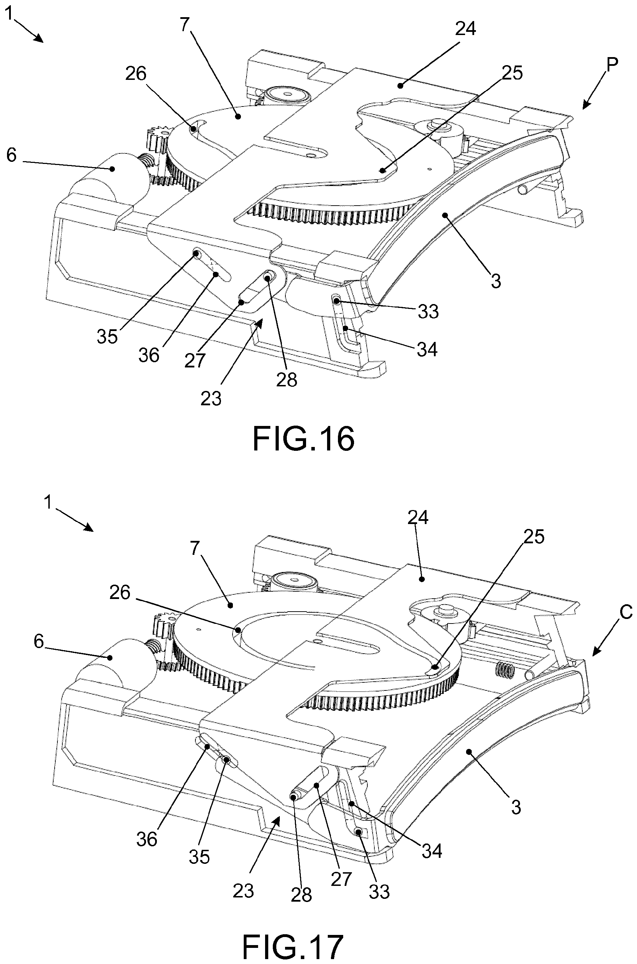

HDU system 1 furthermore comprises cover drive means 23 to move cover 3 between the open position P as shown in Figure 16 and the closed position C as shown in Figure 17. Cover 3 in its closed position C protects the combiner 2 in its storage position S from dust or other things on the dashboard of the car that may harm combiner 2. Cover 3 has to be moved from its closed position C to its open position P before drive means 4 may move combiner 2 from its storage position S into its operating position O. Cover drive means 23 comprise a third slider 24 with a slider pin 25, that interacts with a gearwheel curved guiding member 26 of gearwheel 7. Cover drive means 23 furthermore comprise a cover guiding member 27 in the third slider 24 that interacts with a first cover pin 28 of the cover 3. Cover 3 furthermore comprises a second cover pin 33 that interacts with a first frame guiding member 34 and that cover 3 comprises a third cover pin 35 that interacts with a second frame guiding member 36 to guide the movement of cover 3. This enables that area of cover 3 that closes the housing of the HUD system 1 is substantially orthogonal to Z-direction Z in the closed position C and in the open position P and during movement between these positions.

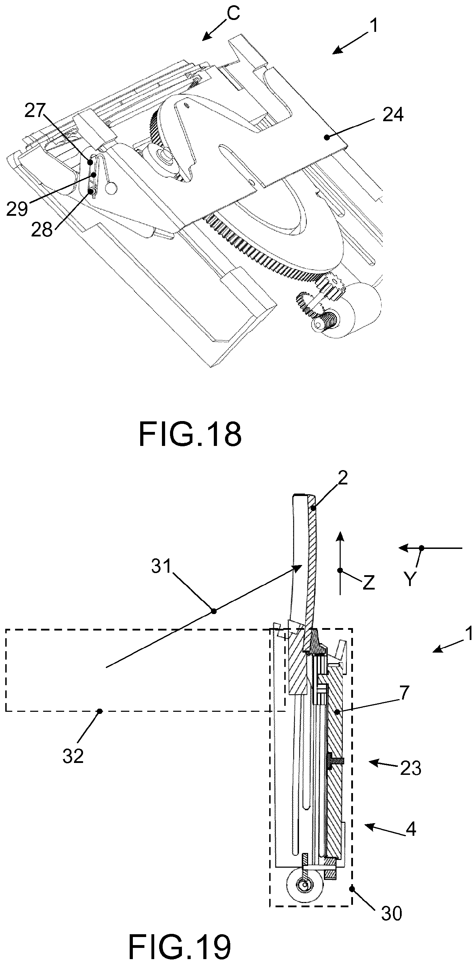

The cover drive means 23 furthermore comprise a cover spring 29 shown in Figure 18 that forces cover pin 28 to run along one side of the cover guiding member 27. This cover spring 29 has the advantage to reduce the noise of the HUD system 1 during opening and closing of the cover 3.

HUD system 1 comprises the advantage, that with only one motor 6 and gearwheel 7 three different movements are realized to move combiner 2 and to incline combiner 2 and to move cover 3. Furthermore it is advantageous that based on the rotational movement of rotation drive means 5 combiner 2 is moved with a sinus-like speed profile between storage position S and operating position O. This ensures strong force to fix the combiner 2 in its operating position O to avoid vibrations of combiner 2.

The mechanical parts of the drive means 4 and the cover drive means 23 are arranged in a first part 30 of the housing of the head-up display system 1 as shown in Figure 19. The optical parts for the optical path 31 of the projector are arranged in a separated second part 32 of the housing of the head-up display system 1. This separation of the mechanical and the optical parts enable a separated development process of these two parts of the head-up display system.

## Claims

1. Head-up display system (1) comprising a combiner (2) to display information in an operating position (O), wherein the combiner (2) is movable by drive means (4) between the operating position (O) and a storage position (S) in a substantial linear movement in Z-direction (Z) to protect the combiner (2) in its storage position (S) with a cover (3), wherein the drive means (4) comprise a rotation drive means (5) with a motor (6) that drives a gearwheel (7), wherein the gearwheel (7) is arranged substantially parallel to the combiner (2) in its operating position (O) and its storage position (S), **characterized in that** the gearwheel (7) comprises a driver pin (8) that interacts with a slider curved guiding member (9) formed in a first slider (10) of a linear drive means (11) to guide the substantial linear movement of the combiner (2) between its operating position (O) and its storage position (S), and wherein curved guiding member (9) comprises a sector (14) in which the guiding curve is a segment of a circle with the same midpoint (15) as the gearwheel (7) to enable that a rotation of the gearwheel (7) with the driver pin (8) within that angle sector (14) causes no movement of the combiner (2) in Z-direction (Z).

2. Head-up display system (1) according to claim 1, **characterized in that** the linear drive means (11) comprise a second slider (12) fixed to the combiner (2), wherein at least one spring element (13) is arranged between the first slider (10) and the second slider (12).

3. Head-up display system (1) according to any of the proceeding claims, **characterized in that** the head-up display system (1) comprises an adjustment drive (17) to adjust an inclination of the combiner (2) from the Z-direction (Z), wherein the adjustment drive (17) comprises a nose gearwheel (18) meshed with the gearwheel (7) substantially only within the angle sector (14), where the rotation of the gearwheel (7) causes no movement of the combiner (2) in Z-direction (Z), which nose gearwheel (18) drives an adjustment screw (19) that pushes the second slider (12) in Y-direction (Y) to adjust the combiner (2) inclination around a combiner axis (20).

4. Head-up display system (1) according to any of the proceeding claims, **characterized in that** the head-up display system (1) comprises cover drive means (23) to move the cover (3) between an open position (P) and a closed position (C) to protect the combiner (2) in its storage position (S) with the cover (3) in its closed position (C), which cover drive means (23) comprise a third slider (24) with a slider pin (25), that interacts with a gearwheel curved guiding member (26) of the gearwheel (7), and a cover guiding member (27) that interacts with a first cover pin (28) of the cover (3).

5. Head-up display system (1) according to claim 4, **characterized in that** cover (3) comprises a second cover pin (33) that interacts with a first frame guiding member (34) and that cover (3) comprises a third cover pin (35) that interacts with a second frame guiding member (36) to guide the movement of cover (3).

6. Head-up display system (1) according to claim 4 or claim 5, **characterized in that** the cover drive means (23) comprise a cover spring (27) that forces the cover pin (28) to run along one side of the cover guiding member (26).

7. Head-up display system (1) according to any of the proceeding claims, **characterized in that** the mechanical parts of the drive means (4) and the cover drive means (23) are arranged in a first part (30) of the housing of the head-up display system (1) and the optical parts for the optical path (31) of the projector are arranged in a separated second part (32) of the housing of the head-up display system (1).

## Patentansprüche

1. Head-up-Anzeigesystem (1), umfassend einen Kombinator (2) zum Anzeigen von Informationen in einer Betriebsstellung (O), wobei der Kombinator (2) durch Antriebsmittel (4) zwischen der Betriebsstellung (O) und einer Lagerstellung (S) in einer im Wesentlichen linearen Bewegung in Z-Richtung (Z) bewegbar ist, um den Kombinator (2) in dessen Lagerstellung (S) mit einer Abdeckung (3) zu schützen, wobei die Antriebsmittel (4) ein Drehantriebsmittel (5) mit einem Motor (6), der ein Zahnrad (7) antreibt, umfassen, wobei das Zahnrad (7) im Wesentlichen parallel zu dem Kombinator (2) in dessen Betriebsstellung (O) und dessen Lagerstellung (S) angeordnet ist, **dadurch gekennzeichnet, dass** das Zahnrad (7) einen Mitnehmerstift (8) umfasst, der mit einem gebogenen Schieberführungsglied (9), das in einem ersten Schieber (10) eines linearen Antriebsmittels (11) ausgebildet ist, zusammenwirkt, um die im Wesentlichen lineare Bewegung des Kombinators (2) zwischen dessen Betriebsstellung (O) und dessen Lagerstellung (S) zu führen, und wobei das gebogene Führungsglied (9) einen Sektor (14) umfasst, in dem die Führungskurve ein Kreissegment ist, das denselben Mittelpunkt (15) wie das Zahnrad (7) aufweist, um zu ermöglichen, dass eine Drehung des Zahnrads (7) mit dem Mitnehmerstift (8) innerhalb dieses Winkelsektors (14) keine Bewegung des Kombinators (2) in Z-Richtung (Z) hervorruft.

2. Head-up-Anzeigesystem (1) gemäß Anspruch 1, **dadurch gekennzeichnet, dass** die linearen Antriebsmittel (11) einen zweiten Schieber (12), der an dem Kombinator (2) befestigt ist, umfassen, wobei mindestens ein Federelement (13) zwischen dem ersten Schieber (10) und dem zweiten Schieber (12) angeordnet ist.

3. Head-up-Anzeigesystem (1) gemäß einem der vorhergehenden Ansprüche, **dadurch gekennzeichnet, dass** das Head-up-Anzeigesystem (1) einen Verstellantrieb (17) zum Einstellen einer Neigung des Kombinators (2) aus der Z-Richtung (Z) umfasst, wobei der Verstellantrieb (17) ein Ansatz-Zahnrad (18) umfasst, das mit dem Zahnrad (7) im Wesentlichen nur innerhalb des Winkelsektors (14) im Eingriff steht, wobei die Drehung des Zahnrads (7) keine Bewegung des Kombinators (2) in Z-Richtung (Z) hervorruft, wobei das Ansatz-Zahnrad (18) eine Einstellschraube (19) antreibt, die den zweiten Schieber (12) in Y-Richtung (Y) drückt, um die Neigung des Kombinators (2) um eine Kombinatorachse (20) herum einzustellen.

4. Head-up-Anzeigesystem (1) gemäß einem der vorhergehenden Ansprüche, **dadurch gekennzeichnet, dass** das Head-up-Anzeigesystem (1) Abdeckungsantriebsmittel (23) umfasst, um die Abdeckung (3) zwischen einer offenen Stellung (P) und einer geschlossenen Stellung (C) zu bewegen, um den Kombinator (2) in dessen Lagerstellung (S) zu schützen, wobei die Abdeckung (3) sich in ihrer geschlossenen Stellung (C) befindet, wobei die Abdeckungsantriebsmittel (23) einen dritten Schieber (24) mit einem Schieberstift (25), der mit einem gebogenen Zahnradführungsglied (26) des Zahnrads (7) zusammenwirkt, und ein Abdeckungsführungsglied (27), das mit einem ersten Abdeckungsstift (28) der Abdeckung (3) zusammenwirkt, umfassen.

5. Head-up-Anzeigesystem (1) gemäß Anspruch 4, **dadurch gekennzeichnet, dass** die Abdeckung (3) einen zweiten Abdeckungsstift (33) umfasst, der mit einem ersten Rahmenführungsglied (34) zusammenwirkt, und die Abdeckung (3) einen dritten Abdeckungsstift (35) umfasst, der mit einem zweiten Rahmenführungsglied (36) zusammenwirkt, um die Bewegung der Abdeckung (3) zu führen.

6. Head-up-Anzeigesystem (1) gemäß Anspruch 4 oder Anspruch 5, **dadurch gekennzeichnet, dass** die Abdeckungsantriebsmittel (23) eine Abdeckungsfeder (27) umfassen, die den Abdeckungsstift (28) dazu zwingt, entlang einer Seite des Abdeckungsführungsglieds (26) zu verlaufen.

7. Head-up-Anzeigesystem (1) gemäß einem der vorhergehenden Ansprüche, **dadurch gekennzeichnet, dass** die mechanischen Teile der Antriebsmittel (4) und der Abdeckungsantriebsmittel (23) in einem ersten Teil (30) des Gehäuses des Head-up-Anzeigesystems (1) angeordnet sind und die optischen Teile für den Strahlengang (31) des Projektors in einem abgetrennten zweiten Teil (32) des Gehäuses des Head-up-Anzeigesystems (1) angeordnet sind.

## Revendications

1. Système d'affichage à tête haute (1) comprenant un combinateur (2) pour afficher des informations dans une position de fonctionnement (O), dans lequel le combinateur (2) peut être déplacé par des moyens d'entraînement (4) entre la position de fonctionnement (0) et une position de stockage (S) dans un déplacement rectiligne conséquent dans la direction Z (Z) pour protéger le combinateur (2) dans sa position de stockage (S) avec un élément de recouvrement (3), dans lequel les moyens d'entraînement (4) comprennent un moyen d'entraînement en rotation (5) avec un moteur (6) qui entraîne une roue dentée (7) dans lequel la roue dentée (7) est disposée sensiblement parallèlement au combinateur (2) dans sa position de fonctionnement (O) et dans sa position de stockage (S), **caractérisé en ce que** la roue dentée (7) comprend
une goupille d'entraînement (8) qui interagit avec un élément de guidage incurvé (9) d'un curseur formé dans un premier curseur (10) d'un moyen d'entraînement linéaire (11) pour guider le déplacement rectiligne conséquent du combinateur (2) entre sa position de fonctionnement (O) et sa position de stockage (S),
et dans lequel un élément de guidage incurvé (9)
comprend un secteur (14) dans lequel la courbe de guidage est un segment d'un cercle avec le même point médian (15) que la roue dentée (7) pour empêcher qu'une rotation de la roue dentée (7) avec la goupille d'entraînement (8) dans le secteur angulaire (14) ne provoque un déplacement du combinateur (2) dans la direction Z (Z).

2. Système d'affichage à tête haute (1) selon la revendication 1, **caractérisé en ce que** les moyens d'entraînement linéaire (11) comprennent un deuxième curseur (12) fixé au combinateur (2), dans lequel au moins un élément à ressort (13) est disposé entre le premier curseur (10) et le second curseur (12).

3. Système d'affichage à tête haute (1) selon l'une quelconque des revendications précédentes, **caractérisé en ce que** le système d'affichage à tête haute (1) comprend une commande de réglage (17) pour régler une inclinaison du combinateur (2) à partir de la direction Z (Z), dans lequel la commande de réglage (17) comprend une roue dentée avant (18) engrenant avec la roue dentée (7) substantiellement que dans le secteur angulaire (14), où la rotation de la roue dentée (7) ne provoque aucun déplacement du combinateur (2) dans la direction Z (Z), laquelle roue dentée avant (18) entraîne une vis de réglage (19) qui pousse le deuxième curseur (12) dans la direction Y (Y) pour régler l'inclinaison (2) du combinateur autour d'un axe de combinateur (20).

4. Système d'affichage à tête haute (1) selon l'une quelconque des revendications précédentes, **caractérisé en ce que** le système d'affichage à tête haute (1) comprend un moyen d'entraînement de l'élément de recouvrement (23) pour déplacer l'élément de recouvrement (3) entre une position ouverte (P) et une position fermée (C) pour protéger le combinateur (2) dans sa position de stockage (S) l'élément de recouvrement (3) étant dans sa position fermée (C), lequel moyen d'entraînement de l'élément de recouvrement (23) comprend un troisième curseur (24) avec une goupille de curseur (25) qui interagit avec un élément de guidage incurvé de roue dentée (26) de la roue dentée (7), et un élément de guidage d'élément de recouvrement (27) qui interagit avec une première goupille d'élément de recouvrement (28) de l'élément de recouvrement (3).

5. Système d'affichage à tête haute (1) selon la revendication 4, **caractérisé en ce que** l'élément de recouvrement (3) comprend une deuxième goupille d'élément de recouvrement (33) qui interagit avec un premier élément de guidage de trame (34) et **en ce que** l'élément de recouvrement (3) comprend une troisième goupille d'élément de recouvrement (35) qui interagit avec un second élément de guidage de trame (36) pour guider le déplacement de l'élément de recouvrement (3).

6. Système d'affichage à tête haute (1) selon la revendication 4 ou 5, **caractérisé en ce que** les moyens d'entraînement de l'élément de recouvrement (23) comprennent un ressort d'élément de recouvrement (27) qui force la goupille de l'élément de recouvrement (28) à se déplacer le long d'un côté de l'élément de guidage de l'élément de recouvrement (26).

7. Système d'affichage à tête haute (1) selon l'une quelconque des revendications précédentes, **caractérisé en ce que** les parties mécaniques des moyens d'entraînement (4) et les moyens d'entraînement de l'élément de recouvrement (23) sont disposés dans une première partie (30) du boîtier du système d'affichage à tête haute (1) et les parties optiques pour le chemin optique (31) du projecteur sont disposées dans une seconde partie séparée (32) du boîtier du système d'affichage à tête haute (1).
